# EUROPEAN PATENT APPLICATION

(11) **EP 2 098 220 A2**
(43) Date of publication of application: **09.09.2009**
(21) Application number: 09002297.1
(22) Date of filing: 18.02.2009
(51) Int. Cl.: A61K 9/00, B01J 13/00

(54) **Fluid device and fluid device assembly**

(30) Priority: 03.03.2008 JP 2008052311
(71) Applicant: Hitachi Plant Technologies, Ltd., Toshima-ku Tokyo 170-8466 (JP)
(72) Inventor: Kato, Hajime, Tokyo 170-8466 (JP); Endo, Yoshishige, Tokyo 170-8466 (JP); Suzuki, Mio, Chiyoda-ku Tokyo 100-8220 (JP); Miyamoto, Tetsuro, Chiyoda-ku Tokyo 100-8220 (JP); Katayama, Erika, Chiyoda-ku Tokyo 100-8220 (JP)
(74) Representative: Beetz & Partner

(57) **Abstract**

A fluid device assembly (410) has a reservoir tank (402) and a condensation device to coat the surfaces of fine particles. Nozzles to eject a dispersion liquid in which the fine particles (201) are dispersedly suspended are installed in the reservoir tank (402) nearly vertically in order to coat the surfaces of the fine particles (201). The dispersion liquid is ejected downward through the vertically-installed nozzles and the surfaces of the fine particles are coated. Since the dispersion liquid is ejected downward through the nozzles, the fine particles the coating thickness of which is controlled are produced.

## Description

### Background of the Invention

The present invention relates to a fluid device and a fluid device assembly to coat a particulate material with a material other than the particulate material.

A so-called encapsulation technology of coating the surfaces of fine particles or particulate fluid can be an effective means in: a DDS (Drug Delivery System) to produce a chemical liquid of fine particles or fine droplets coated with a biodegradable polymer and control the slow-release of the chemical liquid in a body; an NDS (Nutrition Delivery System) to distribute a physiologically functional food component or a nutrient component in a body; and a sugarcoating technology for controlling the flavor and texture of food. The technology is further expected to be applied to, besides pharmaceuticals and food, a novel electronic material and an optical material to realize a highly-functional light blocking effect.

Examples of such a conventional fine particle encapsulation technology are described in JP-A No. 216206/2007(Ref.1), C.Berkland et al., Journal of Controlled Release vol. 73 (2001) pp.59-74(Ref.2), and Anna, Bontoux and Stone, Appl. Phys. Lett. Vol. 82-3 (2003) pp.364-366(Ref.3). Among those, in the case of a microcapsule described in Ref3, minute capsules are produced by: using a minute flow passage structure; homogeneously forming droplets of dispersion phase fluid in a continuous phase liquid; and thereafter forming a membrane on the surface of each of the droplets. In the minute flow passage structure, a continuous phase fluid passage merges with a dispersion phase fluid passage through a confluent fluid passage. In the confluent fluid passage: plural convex structures are placed at intervals; thereby a concavo-convex periodic structure is formed; the cross-sectional area of the confluent fluid passage changes; disturbances are induced at the interface between two fluids of the continuous phase and the dispersion phase; and thus the dispersion phase fluid takes the form of droplets.

In the case of a microcapsule described in JP-A No. 216206/2007, although it is described that membranes are formed on the surfaces of the dispersion phase fluid, nothing is described on how membranes are formed on the surfaces of fine particles and how the fine particles are retained when the membranes are formed. Consequently, the concrete formation of a microcapsule is not sufficiently considered.

### Summary of the Invention

The present invention has been established in view of the above problems of conventional technologies and an object of the present invention is to make it possible to produce fine particles coated with a surface coating material. Another object of the present invention is to make it possible to control the thickness of a coating material when surface coating is applied. Yet another object of the present invention is to increase the throughput of coated fine particles more than ever.

The present invention to attain the above objects is a fluid device used for coating the surfaces of fine particles wherein: a nozzle to eject a dispersion liquid wherein fine particles are dispersively suspended is installed nearly in the vertical direction; the dispersion liquid is ejected downward through the nozzle; and thereby the surfaces of the fine particles are coated while the dispersion liquid move downward.

Further, a fluid device according to the present invention may have a means for generating sheath flow covering the exterior of the dispersion liquid ejected through the nozzle and also may be equipped with a mechanism to give minute disturbances to the dispersion liquid ejected through the nozzle. In addition, it is preferable to increase the throughput by connecting plural fluid devices in parallel.

By the present invention, since a convergent nozzle or a nozzle combined with sheath flow is used, it is possible to: coat fine particles in a material liquid containing the fine particles; and control the thicknesses of the coating membranes into a prescribed range. Further, it is easily possible to increase the throughput of the coated fine particles more than ever.

### Brief Description of the Drawings

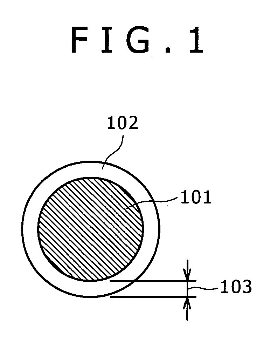

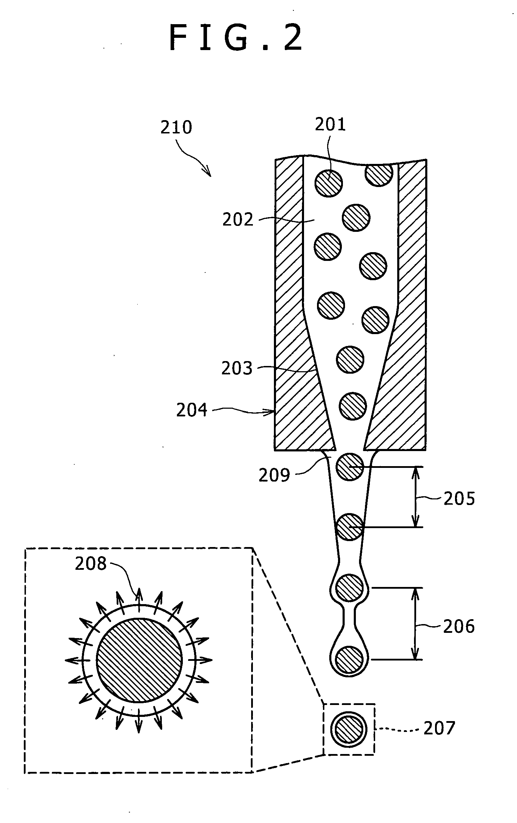

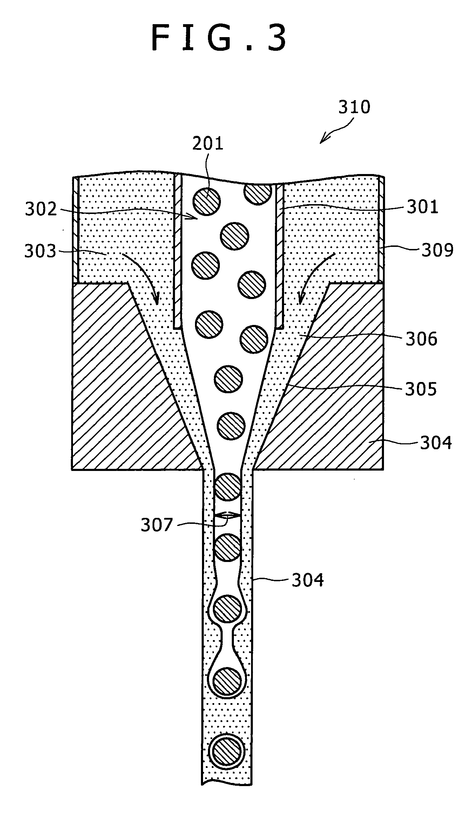

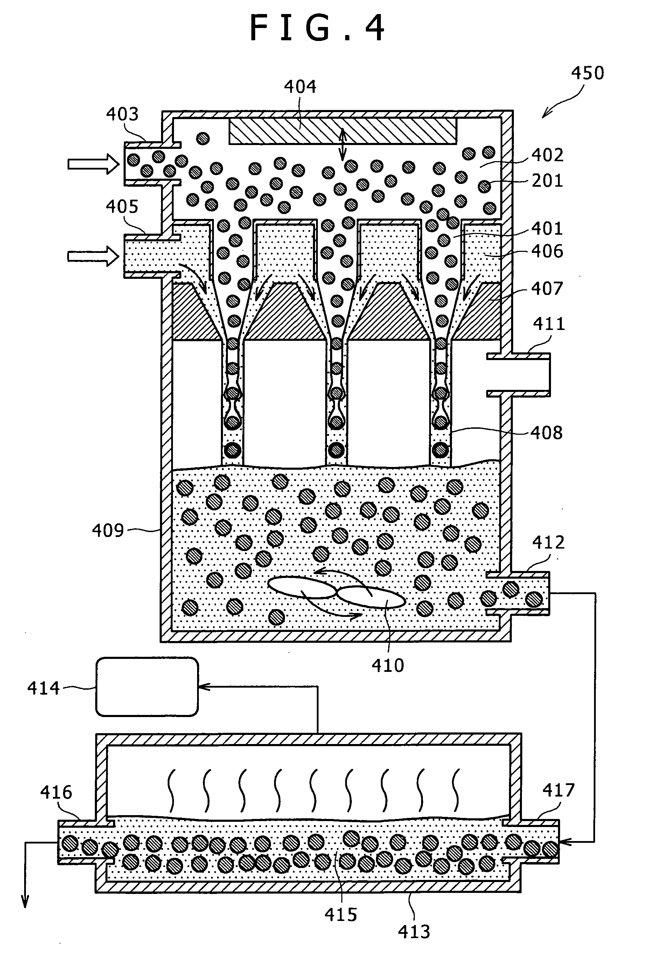

Fig. 1 is a view explaining a final product produced with a fluid device according to the present invention. Figs. 2 and 3 are partially enlarged views showing substantial parts of fluid devices-according to two embodiments of the present invention, respectively. Fig. 4 is a schematic view showing a fluid device assembly formed by mounting plural fluid devices one of which is shown in Fig. 3.

### Detailed Description of the Preferred Embodiments

Some embodiments of a fluid device according to the present invention are hereunder explained in reference to drawings. In the present invention, a fine particulate material to be coated or encapsulated is dispersed in a solution produced by dissolving a coating material or an encapsulation material in an appropriate solvent. Then in the present invention, the solution is ejected through a nozzle, the coating quantity of each content is controlled by using the dissociation phenomenon of a liquid caused by the instability of surface tension, and finally the thickness of the coating layer is controlled. Concrete examples are explained hereunder.

Fig. 1 is a longitudinal sectional view showing a final product 105 produced with a fluid device. The surface of a solid or liquid fine particulate material 101 is encapsulated by coating it with a material 102 other than the material 101. The thickness 103 of the coating layer of the material 102 is controlled in a prescribed range.

In the present embodiment, the final product 105 shown in Fig. 1 is produced by a production method called a solvent extraction method. In the solvent extraction method, a coating material 102 is dissolved in a solvent that can dissolve the coating material 102. A content 101 is coated with the solution in which the coating material 102 dissolves, the solvent in the solution is extracted by diffusion, evaporation or the like, and the coating material 102 is hardened. Consequently, by controlling the quantity of the coating material 102 to be applied, it is possible to control the thickness 103 of the coating material 102 to a prescribed thickness.

Fig. 2 is an enlarged sectional view showing a substantial part of a fluid device 210 according to the present embodiment. The fluid device 210 has a nozzle 204 to eject a solution in which a coating material 102 dissolves. Surface tension instability appears in a solution jet ejected through the nozzle 204 on the basis of the Rayleigh's instability theory. Fine particles are formed by using the surface tension instability.

More specifically, a solution (a material liquid) is produced by dispersing contents 201 to be coated or encapsulated in a solvent 202 wherein a coating material is diluted at pretreatment. The conditioned material liquid containing the contents 201 is pressurized with a pump or the like not shown in the figure and introduced into a nozzle 204 having a rectangular or round sectional shape. In the nozzle 204, a tapered portion 203 the sectional area of which is reduced toward the tip is formed at the downstream portion thereof through which the material liquid 202 in which the coating material 102 dissolves passes. The material liquid formed by mixing the contents 201 and the coating material 102 is ejected as a jet outside the nozzle 204 into a gaseous phase through the tapered portion 203.

On this occasion, the concentration of the contents 201 in the material liquid is adjusted beforehand in accordance with the shape of the tapered portion 203. Thereby the spatial intervals 205 of the contents 201 ejected through the nozzle 204 are controlled. The spatial intervals 206 formed when the material liquid produced by mixing the contents 201 and the coating material 102 breaks apart into droplets after being ejected as a jet depend on the surface tension of the material liquid, the diameter of the jet, and the flow velocity of the jet.

Thus, the inner diameter of the nozzle 204 and the feed velocity of the material liquid are adjusted beforehand and the spatial intervals 206 of the droplets are controlled by giving disturbances to the jet if necessary. A droplet 207 having only one content 201 is separated from the material liquid by controlling both the spatial intervals 205 between the contents 201 and 201 ejected through the nozzle 204 and the spatial intervals 206 formed when the droplets are separated.

On the separated droplet 207, the surface of the content 201 is uniformly covered with a diluent of the coating material 102 acting as the solvent by the effect of surface tension. Besides that, in the interior of the diluent of the coating material 102, the solvent component other than the coating material 102 evaporates (208) and the coating material 102 is hardened. In the present embodiment, it is possible to add a coating material 102 to each content 201 only by a prescribed quantity and hence it is possible to finally control the thickness 103 of the coating layer of each content 201. Here, as the solvent, acetone or the like is used.

The method shown in Fig. 2 is effective in coating a content 201 having a relatively large diameter with a coating material 102. The reason is that the jet of a material liquid ejected into a gaseous phase through a nozzle 204 is ready to separate into droplets each of which has only one content 201 in the gaseous phase. Since the evaporation speed of the evaporation component in a solvent contained in a droplet is faster than the evaporation speed of a content, the evaporation component in the solvent evaporates and a coating component is extracted. On this occasion, since the evaporation speed of the evaporation component is larger than that of the content, the coating component in the solvent is rapidly extracted and hardened.

Meanwhile, as the evaporability of a solvent increases when the solvent included in a droplet evaporates, it is more likely that: only the solvent component evaporates rapidly from a material liquid sticking to a nozzle tip portion 209; a coating material 102 sticks to the nozzle tip portion 209; and clogging of the nozzle is caused. In particular, as the particle diameter of a content 201 is reduced, it is necessary to further reduce the diameter of a nozzle 204 and hence clogging of the nozzle 204 caused by the hardening of a coating material 102 is likely to occur. An embodiment that solves problems occurring in the case where contents 201 of small diameters are used is shown in Fig. 3.

Fig. 3 is an enlarged sectional view showing a substantial part of a fluid device 310 according to another embodiment of the present invention. The fluid device 310 is used when contents 201 finer than the contents 201 shown in Fig. 2 are coated with a coating material 102. A reduced flow passage member 308 that surrounds a hollow cylindrical nozzle 301 through which a material liquid 302 passes and has a hole formed into a truncated conical shape is installed at the lower part. The upper face of the reduced flow passage member 308 is located at a position higher than the tip 306 of the nozzle 301. Further, a gap is formed between the reduced flow passage member 308 and the nozzle 301 in the radial direction at the tip 306 of the nozzle 301. A cylindrical container 309 through which a solvent extraction phase 303 that is different from the material liquid 302 passes is installed above the reduced flow passage member 308.

In the present embodiment configured as stated above, the material liquid 302 is ejected through the nozzle 301 toward the reduced flow passage member 308 and a downward flow of the material liquid 302 is formed. Therewith the solvent extraction phase 303 suitable for extracting a solvent from the material liquid passes through the interior of the container 309 containing the nozzle 301. The solvent extraction phase 303 flows from the container 309 into the reduced flow passage member 308. The solvent extraction phase 303 flowing into the reduced flow passage member 308 flows downward along the reduced flow passage portion 305 as the inner face of the reduced flow passage member 308.

The solvent extraction phase 303 touches the flow of the material liquid 302 delivered from the nozzle 301 at the inner face thereof and the width in the radial direction is reduced at the reduced flow passage portion 305 of the reduced flow passage member 308 when the solvent extraction phase 303 flows downward in the reduced flow passage member 308. Therewith the width in the radial direction of the flow of the material liquid 302 delivered from the nozzle 301 is also reduced. When the solvent extraction phase 303 flows out from the reduced flow passage member 308, the solvent extraction phase 303 forms a sheath flow 304 covering the circumference of the material liquid 302.

The material liquid 302 flowing out from the reduced flow passage member 308 is reduced to a diameter smaller than the diameter of the flow at the nozzle tip 306. In the present embodiment, since the evaporation of the solvent in the material liquid 302 and the hardening of the coating material remaining in the material liquid 302 are delayed to the downstream side of the flow by surrounding the material liquid 302 with the sheath flow 304, it is possible to prevent the material liquid 302 from directly touching the reduced flow passage portion 305 having a small dimension. The diameter 307 of the reduced material liquid 302 varies not only in accordance with the area ratio of the cross section of the reduced flow passage portion 305 of the reduced flow passage member 308 but also in accordance with the ratio of the flow rate of the material liquid 302 to the flow rate of the solvent extraction phase 303. Even when smaller contents 201 are coated therefore, it is possible to prevent: the material liquid 302 from hardening; and the reduced flow passage member 308 and the nozzle 301 from clogging.

In the present embodiment, droplets are separated as the material liquid 302 flows downward and the solvent diffuses from the droplets into the sheath flow 304 of the solvent extraction phase on the occasion of the separation of the droplets. When the solvent is diffused into the sheath flow 304 and the solvent is evaporated, the hardening time of the coating material may be undesirably prolonged in comparison with the case of evaporating the solvent in a gaseous phase. As it is obvious from the fact that a fine nozzle is used in the present embodiment however, only a small amount of the material liquid 302 is used in comparison with the case of evaporating the solvent in a gaseous phase and hence it is possible to shorten the time required for the extraction of the solvent as a whole.

The flow rate of the sheath flow 304 is adjusted and the quantity of a separated droplet is controlled by the following method. When the concentration of the dispersion liquid on coated contents 201 obtained with the fluid device 310 is higher than a prescribed concentration, the flow rate of the solvent extraction phase 303 is increased and the concentration thereof is lowered. On the other hand, when the concentration of the obtained dispersion liquid is low, a condenser not shown in the figure is installed on the downstream side of the fluid device 310. Here, the concentration of a dispersion liquid means the concentration of a solvent extraction phase in which particles disperse and is represented by the volume ratio of particles to a liquid for example.

A case where a throughput is increased by using plural fluid devices each of which is shown in Fig. 3 is schematically shown in Fig. 4. Fig. 4 is a view showing a scale-up fluid device. Plural, three in the present embodiment, of the nozzles each of which is shown in the embodiment of Fig. 3 are installed in parallel. Three hollow cylindrical nozzles 401 are aligned in the transverse direction at the middle in the vertical direction of a reservoir tank 402 as a rectangular parallelepiped container. A pipe 403 to feed a material liquid is connected on a side face of the reservoir tank 402 above the nozzles 401. A vibration generating element 404 including a piezoelectric element or the like is attached to the ceiling of the reservoir tank 402.

A pipe 405 to feed a solvent extraction phase forming a sheath flow to the reservoir tank 402 is connected on the side face of the reservoir tank 402 at the middle in the vertical direction and also on the side of the nozzles 401. Reduced flow passage members 407 are installed in the reservoir tank 402 at positions lower than the position where the pipe 405 is attached. A ventilation port 411 is formed on another side face of the reservoir tank 402 below the reduced flow passage members 407. The lower part of the reservoir tank 402 is used as a recovery tank 409 and a pipe 412 to collect coated contents 201 is connected on a side face near the bottom face.

A condensation unit 413 is installed on the downstream side of the reservoir tank 402. A pipe 417 installed at the lower part of a side face of the condensation unit 413 is connected to the pipe 412 for recovery installed at the lower part of the reservoir tank 402. A pipe 416 to recover a dispersion liquid the concentration of which is adjusted is connected at the lower part on the other side face of the condensation unit. The condensation unit 413 is sealed except the pipes 416 and 417, evacuated with a vacuum pump 414 during operation, and retained in a depressurized environment.

In a fluid device assembly 450 according to the present embodiment as configured above, a material liquid is fed through a pipe 403 and a solvent extraction phase (a sheath liquid) is fed through a pipe 405 abundantly. The two kinds of liquids flow downward in a reservoir tank 402 as a concentric two-layered flow by passing through reduced flow passage members 407 and break apart into droplets in mid-flow. Here, a vibration generating element 404 attached to the ceiling of the reservoir tank 402 gives disturbances by vibration to the jets of the material liquid ejected from nozzles 401.

The solvent evaporates from the droplets formed by breaking apart from the material liquid and coated contents 408 are formed. The contents 408 fall down in a recovery tank 409 together with the sheath liquid. A stirring mechanism 410 such as a magnetic stirrer is installed in the recovery tank 409. The coated contents 408 distribute homogeneously in the dispersion liquid with the stirring mechanism 410. Here, a ventilation port 411 installed below the reduced flow passage members 407 is used for leading the solvent outside the reservoir tank 402 so that the solvent dispersing in the sheath liquid may evaporate continuously.

The homogenized dispersion liquid contained in the recovery tank 409 is led to a condensation unit 413 through a pipe 412 with a pump not shown in the figure. The dispersion liquid 415 in the condensation unit 413 is condensed to a required concentration by keeping the condensation unit 413 in a depressurized environment with a vacuum pump 414 connected to the condensation unit 413. The dispersion liquid the concentration of which is adjusted is taken out through the pipe 416 with a pump not shown in the figure. Otherwise, the whole solvent extraction phase is evaporated in the condensation unit 413 and fine particles are taken out.

In the above embodiments, the production amount can be easily increased from a laboratory development level to a mass production level at a plant. Further, it is possible to carry out a coating or encapsulation process efficiently while the consumption of a material experimentally used is reduced. Furthermore, it is possible to: control the coating thickness of a material; and easily control the slow-release of encapsulated contents in the case of the encapsulation of a biodegradable material.

## Claims

1. A fluid device (210; 310) used for coating the surfaces of fine particles (101; 201) wherein:
a nozzle (204; 301) to eject a dispersion liquid (202; 302) wherein fine particles (101; 201) are dispersively suspended is installed nearly in the vertical direction;
the dispersion liquid (202; 302) is ejected downward through the nozzle (204; 301); and
thereby the surfaces of the fine particles (101; 201) are coated while the dispersion liquid (202; 302) moves downward.

2. The fluid device (310) according to Claim 1, wherein the fluid device (310) has a means for generating a sheath flow covering the exterior of the dispersion liquid (302) ejected through the nozzle.

3. The fluid device (310) according to Claim 2, wherein the fluid device (310) is equipped with a mechanism to give minute disturbances to the dispersion liquid ejected through the nozzle.

4. A fluid device assembly (450) wherein the throughput is increased by connecting plural fluid devices (210; 310) according to any one of Claims 1 to 3 in parallel.
